# EUROPÄISCHE PATENTSCHRIFT

(11) **EP 0 981 094 B1**
(45) Veröffentlichungstag und Bekanntmachung des Hinweises auf die Patenterteilung: **24.03.2004**
(21) Anmeldenummer: 99116102.7
(22) Anmeldetag: 17.08.1999
(51) Int. Cl.: G06F 15/02

(54) **Verfahren zum Erfassen, Auswerten und Darstellen von Sportereignissen mit einem elektronischen Handrechner**
Method for the input, evaluation and display of sport events with an electronic hand-held computer
Procédé pour saisir, evaluer et indiquer des données d'événements sportifs avec un ordinateur portatif électronique

(30) Priorität: 17.08.1998 DE 29814687 U; 18.09.1998 DE 19842747; 30.03.1999 DE 19914481
(43) Veröffentlichungstag der Anmeldung: 23.02.2000
(73) Patentinhaber: Pemp, Irene, 92260 Ammerthal (DE)
(72) Erfinder: Pemp, Irene, 92260 Ammerthal (DE)

(56) Entgegenhaltungen:
- EP-A- 0 763 808
- DE-A- 4 122 398
- DE-A- 4 444 342
- DE-U- 9 212 471
- FR-A- 2 752 979
- US-A- 5 653 634
- PATENT ABSTRACTS OF JAPAN vol. 199, no. 703, 31. März 1997 (1997-03-31) & JP 08 314867 A (SHARP CORPORATION), 29. November 1996 (1996-11-29)
- PATENT ABSTRACTS OF JAPAN vol. 12, no. 417 (P-782), 7. November 1988 (1988-11-07) & JP 63 155350 A (TOKUO KODAMA), 28. Juni 1988 (1988-06-28)
- PATENT ABSTRACTS OF JAPAN vol. 199, no. 808, 30. Juni 1998 (1998-06-30) & JP 10 063728 A (HITACHI LIMITED), 6. März 1998 (1998-03-06)

## Beschreibung

Die Erfindung bezieht sich auf ein Verfahren zur Erfassung, Auswertung und Darstellung der Spielergebnisse eines sportlichen Wettbewerbs mittels eines elektronischen Handrechners gemäß dem Oberbegriff des unabhängigen Patentanspruchs 1.

EP-A-763,808 beschreibt ein Handgerät (personal digital assistant), das zum Zweck der Routenplanung Eingabedaten vom Benutzer erhält und eine gewünschte Route erstellen kann. Über eine Mobilfunkverbindung können weitere Daten von einem Informationszentrum abgerufen und der Route hinzugefügt werden.
DE-OS-44,44,342 beschreibt einen Computer im Format eines Taschenbuchs. Über ein einschiebbares Speichermedium werden Daten zu Reiseinformationen eingegeben. Lokalspezifische Informationen können drahtlos von Verteilstationen auf den Computer überspielt werden.

Aufgabe der Erfindung ist es, ein Verfahren für einen Handrechner anzugeben, mit dem in besonders einfacher Weise die Ergebnisse von sportlichen Wettbewerben erfaßt, ausgewertet und zum Beispiel als Tabelle dargestellt werden können.

Zur Lösung dieser Aufgabe ist ein Verfahren mit den Merkmalen des Patentanspruchs 1 geeignet.

Zweckmäßige Weiterbildungen der erfindungsgemäßen Merkmale sind in den jeweiligen abhängigen Ansprüchen enthalten.

Das erfindungsgemäße Verfahren dient zur Erfassung von aktuellen Ergebnissen in sportlichen Wettbewerben, an denen mehrere Teilnehmer oder Mannschaften beteiligt sind. Es dient auch zur Bildung von Spiel- oder Teilnehmergruppierungen zwecks Qualifikation, Spielbegegnung, Tabellenauswertung und ähnlichem. In gleicher Weise wie (pro Saison oder pro Turnier gesetzte oder ausgeloste) sportliche Spielrunden können auch Fahrpläne und Verkehrsverbindungen aktualisiert und der neuesten Verkehrslage angepaßt werden.

Ein Merkmal der Erfindung besteht darin, daß das jeweilige, ins Gerät einschiebbare Speichermedium bevorzugt eine Chipkarte ist. Die Chipkarte enthält, beispielsweise für eine Saison oder für ein Turnier, die für den jeweiligen sportlichen Wettbewerb typischen Daten, wie zum Beispiel die Art des Wettbewerbs, die Teilnehmer des Wettbewerbs, die Spieltage und so weiter. Die Chipkarte enthält auch die für den jeweiligen sportlichen Wettbewerb spezifischen Programmdaten, insbesondere die Regeln für die Auswertung der Spielergebnisse, für die Bildung von Spiel- oder Teilnehmergruppierungen und so weiter. Die jeweiligen Ergebnisse, Teilergebnisse oder Zwischenergebnisse können auf der Chipkarte gespeichert, dort dann jederzeit geändert und neu gespeichert werden.

In analoger Weise können Fahrpläne oder Verkehrsverbindungen zum Sportstadion oder zur Sporthalle auf der Chipkarte als spezifische erste Daten gespeichert werden. Die aktuelle Verkehrssituation, beispielsweise der Ausfall einer U-Bahn, kann in das Speichermedium eingegeben werden, so daß sich die Darstellung der möglichen Verkehrsverbindungen entsprechend ändert.

Das einschiebbare Speichermedium kann von Saison zu Saison oder von Turnier zu Turnier geändert werden. Es ist jedoch auch möglich, den elektronischen Handspeicher mit einem fest eingebauten Datenspeicher für die Nutzdaten zu versehen. In diesem Fall weist der elektronische Handrechner eine Schnittstelle für ein Kabel auf. Das Kabel ermöglicht den Anschluß an einen PC oder einen sonstigen Anschluß, beispielsweise ans Internet. Über das Internet können die Nutzdaten im Datenspeicher für eine neue Saison oder für ein neues Turnier abgerufen werden.

Weitere Schnittstellen sind möglich, um die alphanumerische Eingabe von anderen Spielorten aus zu ermöglichen. Dabei kann es sich um eine optoelektronische Schnittstelle, insbesondere um eine Infrarot-Schnittstelle zu einem gleichartigen Gerät handeln; bei dieser Ausführungsform befindet sich die Schnittstelle am Gehäuse des elektronischen Handrechners. Die optoelektronische Schnittstelle kann jedoch auch am einschiebbaren Speichermedium bzw. am Datenspeicher des Rechners angebracht sein. Ferner kann das einschiebbare Speichermedium, bzw. der Datenspeicher, einen Funkempfänger aufweisen, um die Ergebnisse oder Zwischenstände von entfernten Spielorten einzuspeisen. Die variablen Daten können auch in konventioneller Weise durch eine alphanumerische Tastatur oder durch eine Spracheingabe auf den neuesten Stand gebracht werden.

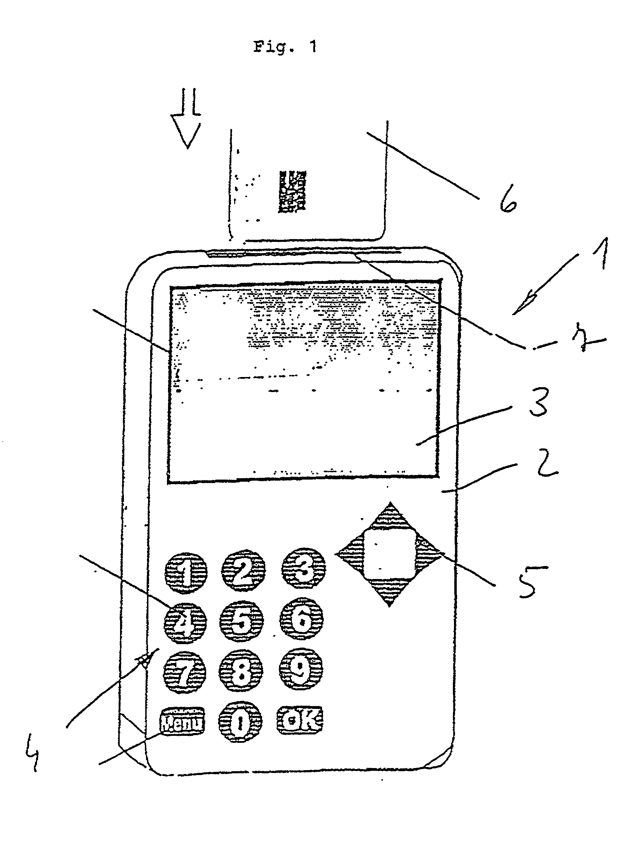

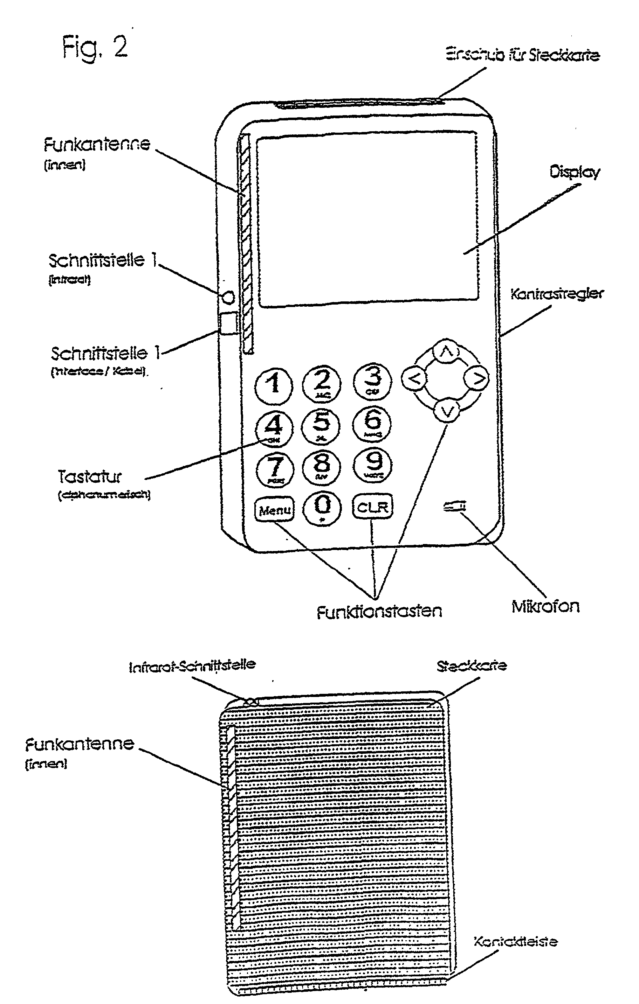

Die Erfindung wird im folgenden anhand der Figuren 1 und 2 näher erläutert. Dabei zeigt
- Figur 1: eine Aufsicht des Geräts zur Ausübung des erfindungsgemäßen Verfahren mit einer zugehörigen Chipkarte;
- Figur 2: eine Aufsicht des Geräts mit einer Steckkarte, wobei die verschiedenen Möglichkeiten von Schnittstellen dargestellt sind.

Das Gerät 1, welches nach Art eines elektronischen Taschenrechners ausgeführt ist, besteht im Wesentlichen aus einem Gehäuse 2, beispielsweise aus ASB - Kunststoff. An der Vorderseite des Gehäuses 2 ist ein Display oder Anzeigefeld 3 zur optischen Darstellung von Texten, aber auch von Grafiken vorgesehen. Weiterhin ist an der Vorderseite des Gehäuses 2 ein alphanumeriches Tastenfeld 4 vorgesehen. Mit "0 - 9" sind beispielsweise numerische Tasten bezeichnet. In der einfachsten Ausführungsform gemäß Figur 1 werden diese numerische Tasten durch Funktionstasten mit den Bezeichnungen "Menu", "O.K." sowie vier Cursortasten (5) zur Steuerung eines Cursors des Displays 3 in zwei Achsen ergänzt.

Im Inneren des Gehäuses 2 ist auf einer nicht dargestellten Platine ein Prozessor, beispielsweise ein AMD-Prozessor untergebracht, der mit den vorgenannten Funktionselementen zur Eingabe und Anzeige zusammenwirkt. Die Platine kann auch einen Speicher zur Aufnahme eines Betriebssystems sowie möglicher, anwendungsbezogener Programmroutinen, zum Beispiel in Form eines EE-PROM aufweisen. Alternativ kann das Betriebssystem und/oder die Programmroutine auch auf einem einschiebbaren Speichermedium 6 niedergelegt sein. In diesem Fall ist die Prozessorplatine mit einer Leservorrichtung 7 für die Chipkarte 6 versehen. Die Figur 2 zeigt unten eine entsprechende Kontaktleiste der Steckkarte.

Die Kontrasteinstellung erfolgt bei der Ausführungsform gemäß Figur 1 über Software. Gemäß Figur 2 ist auch eine Kontrastregelung per Knopf möglich. Für die Betriebsspannung sorgt eine Batterie in einem Batteriefach des Gehäuses 2.

Die Chipkarte 6 gemäß Figur 1 bzw. die Steckkarte gemäß Figur 2 können eine Infrarot - Schnittstelle oder eine innen liegende Funkantenne aufweisen. In ähnlicher Weise kann das Gehäuse 2 eine Schnittstelle (in Figur 1 nicht dargestellt; in Figur 2 Infrarot und/oder Kabel) oder eine innen liegende Funkantenne aufweisen.

Das Gerät 1 mit der jeweiligen Chipkarte 6 dient zur Eingabe und Auswertung der Ergebnisse von Wettbewerben im Sportsektor, beispielsweise für die erste und zweite Bundesliga, UEFA-Cup, EM, WM. Jedem sportlichen Wettbewerb ist eine eigene Chipkarte 6 zugeordnet, die in ihrem Chip, vorzugsweise als feste erste Daten gespeichert die spezifischen Daten des betreffenden Wettbewerbes enthält, nämlich u.a. Name der Teilnehmer des betreffenden Wettbewerbes, sämtliche Spieltage mit den jeweiligen Begegnungen usw.. Weiterhin enthält die Chipkarte 6 bzw. der dortige Speicher Auswertungsprogramme, beispielsweise für die Auswertung von Spielergebnissen nach den dem jeweiligen Wettbewerb speziell zugrundeliegenden Regeln.

Eine weitere Besonderheit besteht darin, daß auf der Chipkarte 6 auch variable Daten gespeichert und von dem Benutzer des Gerätes 1 jederzeit geändert und/oder neu gespeichert werden können, und zwar insbesondere die Ergebnisse der Begegnungen in dem jeweiligen Spiel.

Die Daten über die Teilnehmer, über die Spielergebnisse, Spieltage und Begegnungen, usw. werden vorzugsweise auf der Chipkarte 6 bzw. in dem dortigen Speichermedium in einer geeigneten Datenbankstruktur verwaltet, so daß diese Daten dann nach dem Einführen der Chipkarte 6 in den Karteneinschub 7, der mit einem integrierten Ein- und Ausschalter versehen ist, im Prozessor des Gerätes 1 unter Berücksichtigung der auf der Chipkarte 6 auch gespeicherten, wettbewerbspezifischen Programme oder Auswertprogramme ausgewertet und beispielsweise als Tabelle auf dem Display 3 dargestellt werden können.

Bevorzugt ist die Chipkarte 6 mit einem Sicherheits-PIN versehen, so daß insbesondere ein Einlesen und/oder Auslesen von Daten nur durch den Berechtigten bzw. Inhaber des Gerätes 1 möglich ist. Weiterhin ist die Chipkarte 6 vorzugsweise auch mit einem Geräte-PIN versehen, so daß ein Lesen der Chipkarte 6 auf fremden Geräten nicht möglich ist. Dieser Geräte-PIN wird beispielsweise beim ersten Einstecken einer Chipkarte 6 in das Gerät 1 von diesem auf der Chipkarte automatisch gerätespezifisch festgelegt.

Die Speicherkapazität der Chipkarte beträgt beispielsweise 7 Kb.

Die Steuerung des Gerätes 1 erfolgt durch entsprechende Eingabe an der alphanumerischen Tastatur 4. Zusätzlich hierzu oder anstelle hiervon kann auch eine akustische bzw. Sprachsteuerung verwendet sein. Hierfür besitzt das Gerät dann an der Vorderseite auch ein Mikrophon, wie dies in der Figur mit 8 angedeutet ist. Die Steuerung ist dann beispielsweise menügeführt ausgebildet, d.h. mit der Sprachsteuerung werden akustisch Steuerbefehle oder entsprechende Kennworte eingegeben, die auf dem Display 3 beispielsweise in einer Auswahl angezeigt sind.

Nach einer besonders bevorzugten Auführungsform ist der elektronische Handrechner im Scheck - Kartenformat oder einer ähnlichen Größe ausgebildet. Dementsprechend weist der elektronische Handrechner ein einzeiliges oder mehrzeiliges Display auf. Die Spannungsversorgung erfolgt über Solarzellen oder über eine Knopfzelle. Der Rechner kann mit oder ohne Ein- /Ausschalter ausgebildet sein. Die Bedienung des Rechners erfolgt über eine numerische oder alphanumerische Folientastatur. Des weiteren beinhaltet der Rechner ein Programm zur Erfassung von Sport - Ergebnissen mit anschließender Tabellenauswertung. Die Daten werden bei jeder Eingabe bzw. Änderung in einem Festspeicher gespeichert.

## Patentansprüche

1. Verfahren zur Erfassung, Auswertung und Darstellung der Spielergebnisse eines sportlichen Wettbewerbs mittels elektronischer Handrechner (1), die einen in einem Gehäuse (2) untergebrachten Prozessor mit zugehörigem Arbeitsspeicher, ein Display (3) am Gehäuse (2), eine alphanumerische Eingabe (4) sowie Funktionstasten (5) am Gehäuse (2) und eine Schnittstelle zu einem anderen Rechner umfassen, **dadurch gekennzeichnet, dass** jeder elektronische Handrechner (1) mit einem Leser für ein einschiebbares Speichermedium (6) für erste und zweite Daten ausgebildet ist, wobei über die alphanumerische Eingabe (4) und die Funktionstasten (5) die zweiten Daten betreffend die Spielergebnisse am Aufenthaltsort eingegeben werden und die besagte Schnittstelle, optoelektronisch oder per Kabel mit gleichartigen elektronischen Handrechnern (1) verbunden ist, über welche die zweiten Daten betreffend die Spielergebnisse von entfernten Spielorten des besagten Wettbewerbes alphanumerisch eingegeben werden, wobei dem, dem besagten, sportlichen Wettbewerb zugeordnete, spezifische erste Daten auf dem Speichermedium (6) gespeichert sind und nach dem Einführen des Speichermediums (6) sowie die Erfassung der zweiten Daten im Prozessor ausgewertet werden.

2. Verfahren nach Anspruch 1 **dadurch gekennzeichnet, dass** das Speichermedium (6) aus Sicherheitsgründen mit einer persönlichen Identifikationsnummer (PIN) ausgestattet ist.

3. Verfahren nach Anspruch 1 und 2, **dadurch gekennzeichnet, dass** die alphanumerische Eingabe über eine Tastatur (4) erfolgt.

4. Verfahren nach einem der vorhergehenden Ansprüche, **dadurch gekennzeichnet, dass** die numerische Eingabe als Sprache (8) erfolgt.

5. Verfahren nach einem der vorhergehenden Ansprüche, **dadurch gekennzeichnet, dass** das einschiebbare Speichermedium (6) mit einem gerätespezifischen Code ausgestattet ist.

6. Verfahren nach einem der vorhergehenden Ansprüche, **dadurch gekennzeichnet, dass** auf dem einschiebbaren Speichermedium (6) das Betriebssystem des Rechners gespeichert ist.

7. Verfahren nach einem der vorhergehenden Ansprüche, **dadurch gekennzeichnet, dass** die auf dem einschiebbaren Speichermedium (6) gespeicherten spezifischen ersten Daten unveränderlich sind.

8. Verfahren nach einem der vorhergehenden Ansprüche, **dadurch gekennzeichnet, dass** die den sportlichen Wettbewerben zugeordneten spezifischen ersten Daten von einer Sportart, einer Spielsaison und einem Land abhängig ist.

## Claims

1. Procedures for the entry, analysis and representation of the play results of a sporty competition by means of electronic manual calculators (1), the one processor with appropriate workspace, a display (3) at the housing (2), accommodated in a housing (2), an alphanumeric input (4) as well as function keys (5) at the housings (2) and an interface to another computer cover, by the fact characterized that each electronic manual calculator (1) with a reader for an insertable storage medium (6) for first and second data is trained, whereby over the alphanumeric input (4) and the function keys (5) concerning the second data the play results at the place of residence are input and the mentioned interface is connected, opto-electronically or by cables with homogeneous electronic manual calculators (1), over which the second are alphanumerically input data concerning the play results of distant play places of of the mentioned competition, whereby that the mentioned, to sporty competition assigned, specific first data on the storage medium (6) are stored and after the introduction of the storage medium (6) as well as the entry of the second data in the processor are analysed.

2. Procedure according to requirement by the fact 1 characterized that the storage medium (6) for safety reasons is equipped with a personal identification number (pin).

3. Procedure according to requirement 1 and 2, by the fact characterized that the alphanumeric input been made by a keyboard (4).

4. Procedure after one of the preceding requirements, by the fact characterized that the nummerische input taken place as language (8).

5. Procedure after one of the preceding requirements, by the fact characterized that the insertable storage medium (6) is equipped with a device-specific code.

6. Procedure after one of the preceding requirements, by the fact characterized that on the insertable storage medium (6) the operating system of the computer is stored.

7. Procedure after one of the preceding requirements, by the fact characterized that the specific first data stored on the insertable storage medium (6) are constant.

8. Procedure after one of the preceding requirements, by the fact characterized that those is dependent on kind of sport, one play season and a country the sporty competitions assigned specific first data.

## Revendications

1. Procédures pour l'entrée, l'analyse et la représentation des résultats de jeu d'une concurrence sportive à l'aide des calculatrices manuelles électroniques (1), l'un processeur avec la zone de travail appropriée, un affichage (3) au logement (2), facilité dans un logement (2), une entrée alphanumérique (4) comme des touches de fonction (5) aux logements (2) et à une interface à une autre couverture d'ordinateur, par le fait caractérisé que chaque calculatrice manuelle électronique (1) avec un lecteur pour un support de stockage insérable (6) pour d'abord et deuxièmes données est formée, par lequel au-dessus de l'entrée alphanumérique (4) et des touches de fonction (5) au sujet des deuxièmes données le jeu résulte à le domicile sont entrés et l'interface mentionnée est reliée, optoélectronique ou par des câbles aux calculatrices manuelles électroniques homogènes (1), dont au-dessus la seconde sont alphanumériquement des données d'entrée au sujet des résultats de jeu des endroits éloignés de jeu de de la concurrence mentionnée, par lequel cela mentionnée, à la concurrence sportive assignée, les premières données de détail sur le support de stockage (6) soient enregistrés et après que l'introduction du support de stockage (6) aussi bien que l'entrée des deuxièmes données dans le processeur sont analysées.

2. Procédé selon la condition par le fait 1 caractérisé que le support de stockage (6) pour des raisons de sûreté est équipé d'un numéro d'identification personnelle (broche).

3. Procédé selon la condition 1 et 2, par le fait caractérisé que l'entrée alphanumérique fait par un clavier (4).

4. Procédé après une des conditions précédentes, par le fait caractérisé que le nummerische a entré eu lieu comme langage (8).

5. Procédé après une des conditions précédentes, par le fait caractérisé que le support de stockage insérable (6) est équipé d'un code device-specific.

6. Procédé après une des conditions précédentes, par le fait caractérisé que sur le support de stockage insérable (6) le système d'exploitation de l'ordinateur est enregistré.

7. Procédé après une des conditions précédentes, par le fait caractérisé que les premières données spécifiques enregistrées sur le support de stockage insérable (6) sont constantes.

8. Procédé après un des conditions précédentes, par le fait caractérisé que ceux dépend du genre de sport, d'une saison de jeu et d'un pays les concours sportifs ont assigné les premières données de détail.
